# EUROPEAN PATENT APPLICATION

(11) **EP 3 093 092 A1**
(43) Date of publication of application: **16.11.2016**
(21) Application number: 15177554.1
(22) Date of filing: 20.07.2015
(51) Int. Cl.: B23K 9/10

(54) **METHOD AND APPARATUS FOR CONTROLLING WELDING OPERATIONS**

(30) Priority: 10.03.2015 US 201514643376
(71) Applicant: Linde Aktiengesellschaft, 80331 München (DE)
(72) Inventor: BERKMANNS, Joachim, Oakville, Ontario L6M 5C1 (CA)

(57) **Abstract**

A method and apparatus for controlling a welding operation are disclosed. A power source is in communication with a microphone present in an article of welding apparel such as the welding helmet of a welder. The welder provides spoken commands which instruct the power source to perform an action such as turning on a welding torch or increasing the speed of the feed of wire to the weld. This obviates the need for the welder to stop the welding operation and manually adjust the power source.

## Description

### BACKGROUND OF THE INVENTION

Arc welding is a family of processes used to join metal components by means of an arc. The arc is created between the work piece and a suitable electrode by means of a power source and process parameters must be adjusted precisely in order to achieve a good welding result. To adjust the process parameters, the power source will commonly have a variety of push buttons, dials or other manually operated input devices. These manually operated input devices allow the operator to adjust parameters such as but not limited to welding voltage, wire speed, weld program, pulse parameters, ramp in and ramp out, and shielding gas pre and post flow.

Adjusting the welding parameters is a frequent occurrence both from job to job but also during individual jobs. These adjustments can be in response to for example welding with too much or too little heat; welding with too much or too little wire; a different joint geometry; and welding in different weld positions.

Whenever welding parameters need adjustment, the welder stops the weld, flips up the helmet they are wearing and approaches the power source to make the necessary corrections by manually operating the buttons and dials at the power source. Once the appropriate adjustments are made, the welder flips down the helmet and starts welding again. This procedure can occur frequently and is particularly time consuming when the power source is further away from the work piece as in the case of welding using booms and longer cables or when the welder is positioned on a ladder or in a confined space.

Stopping a welding process to change weld parameters also creates a weld discontinuity (end crater with subsequent restart) which has the potential to include weld imperfections. Changing the process parameter on the fly can avoid these start and stops and increase weld quality.

Welding further requires a high degree of concentration by the welder With each interruption to adjust process parameters, this concentration is lost with the potential for forming a less desirable weld.

The present invention alleviates this problem as it allows the welder to make the adjustments to the welding parameters using vocal commands and not having to interrupt the welding process by approaching the power source.

### SUMMARY OF THE INVENTION

In one embodiment of the invention, there is disclosed a method for controlling a welding operation comprising a power source and a welding torch comprising speaking a command to the power source.

By speaking a command, the welding operator will deliver the command to the power source which will perform an action in response to the spoken command.

As such, the invention provides for direct communication between the welder or the operator of the welding equipment and the power source for the welding equipment.

In another embodiment of the invention, there is disclosed a welding apparatus comprising a power source, a welding torch and welding apparel, wherein the welding apparel contains a microphone in communication with the power source.

For purposes of the present invention, microphone is defined as including any type of suitable receiver which can produce an electrical signal from air pressure variations. The microphone may be one microphone or more than one microphone depending upon the type of welding operation and need for redundancy.

The spoken command is made by the welder in the vicinity of a microphone. The microphone may be incorporated into sections of the welders clothing.

For example, the microphone may be incorporated into a welder's welding apparel which is selected from the group consisting of a welding helmet, goggles, gloves, vest and jackets, including other protective gear typically worn by a welder during welding operations. The microphone may also be physically separate from the welder but in close physical proximity to the welder. Preferably, the spoken command is made into a microphone that is present in a welding helmet.

The microphone is connected to the power source and this connection can be selected from the group consisting of either a wired connection or a wireless connection. The wireless connection can be a Bluetooth connection.

The welding operation is typically an arc welding operation such as a gas metal arc welding operation. Tungsten inert gas welding, plasma arc welding and shielded metal arc welding could also be the welding operation

The power source further comprises a means to interpret a spoken command and is typically selected from the group consisting of a programmable logic controller (PLC), voice recognition software and voice interpretation software. These means can interpret the spoken command and will adjust the power source in response thereto. The spoken command can be selected from a command to start the welding operation, stop the welding operation and change parameters of the welding operation.

In the situation where an older existing power source that does not have the built in means to interpret a spoken command the invention further provides for incorporating a stand alone device that can receive and interpret the voice command and then convert it into suitable electronic signals. These electronic signals are directed to the older power source to control said older power source in the same remote manner as for those power sources that incorporate a built in means to interpret a spoken command.

Therefore the means to interpret the spoken command may be physically separate from and continue to be in electronic communication with the power source.

### BRIEF DESCRIPTION OF THE DRAWINGS

Figure 1 is a schematic of a welder in communication with a new power source ready to interpret voice commands per the present invention
Figure 2 is a schematic of a welder in communication with an older power source via a stand alone device (retrofit voice interpretation module) which converts voice commands into suitable electrical signals to control said power source

### DETAILED DESCRIPTION OF THE INVENTION

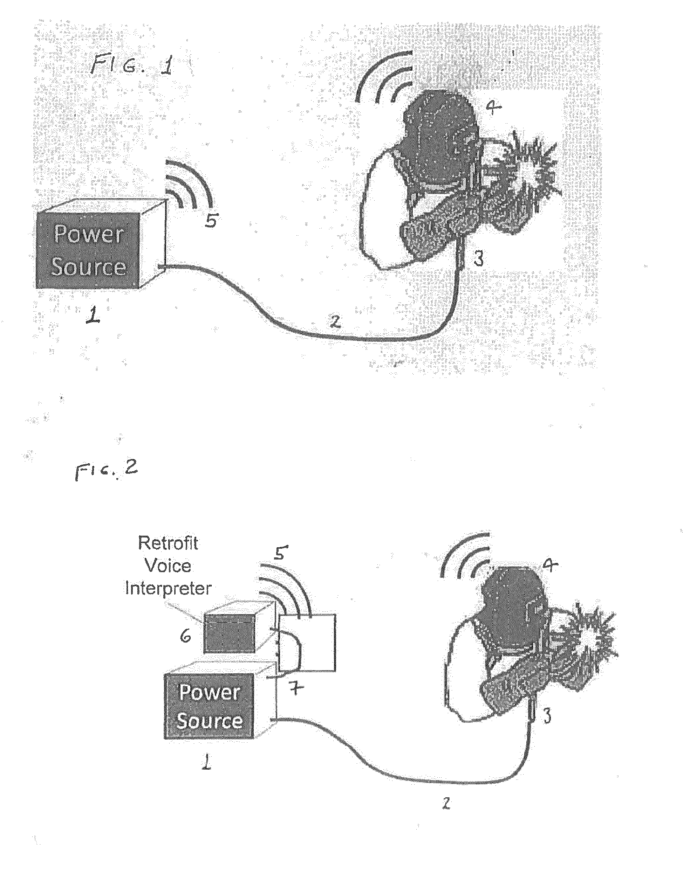

Turning to Figure 1, there is disclosed a method and apparatus for controlling the actions of a welding operation using voice commands. The voice commands are delivered through a microphone that is mounted in or on an article of welding apparel, in this instance a welding helmet 4. As discussed previously, the microphone could be mounted in or on the welding helmet worn by a welder but could also be mounted in or on an article of apparel selected from the group consisting of goggles, gloves, vest, jacket or other protective welding gear typically worn by a welder. The microphone may also be physically separate from the welder but in close physical proximity to the welder.

A power source 1 is physically connected to a welding torch 3 by a cable 2. The cable 2 length can be any length that is typical for welding operations.

The welding torch 3 is typical of welding torches and will be chosen depending upon the type of welding operation such as gas metal arc welding, tungsten inert gas welding, plasma arc welding or shielded metal arc welding that is to be performed.

The welding helmet 4 is typical of welding helmets such as those that are commercially available and in use by welders. The helmet 4 contains a microphone (not shown) which will transmit the welding operator's spoken instruction back to the power source 1 and programmable logic controller (not shown) through the cable 2 or wirelessly 5.

The power source 1 would contain means to interpret a spoken command into an action corresponding to that spoken command. These means are selected from the group consisting of a programmable logic controller (PLC), voice recognition software and voice interpretation software. The welder would speak one or more commands that when received by the power source 1 would be interpreted by the PLC as an instruction for the power source 1 to perform a particular operation.

In Figure 2, like components are identified with the same numbers as in Figure 1. In this embodiment of the invention, an older power source 1 is provided for that does not have means to interpret a spoken command built into its operating structure. Consequently an external retrofit means to interpret a spoken command, i.e., a retrofit voice interpretation module, 6 will be in electronic communication with the power source 1 through electronic connection means 7.

Alternatively the electronic connection means between the retrofit voice interpretation module 6 and the power source 1 can be through a wireless connection 5. The retrofit voice interpretation module 6 translates the spoken command into suitable electrical signals that now pass through a input output board in said power source 1 which make the power source 1 react to the verbal command in the manner provided for in the invention.

The power source 1 would connect to the welding torch 3 through a cable 2. In this embodiment of the invention, the cable 2 would deliver signal information to the torch 3 as in a traditional welding operation but would not act as means to feed the spoken command signal back to the power source 1 as it would where the spoken word interpreter is built into the power source.

The welding helmet 4 would operate as described above and allow for the spoken command to be directed to the means to interpret a spoken command 6 wirelessly 5.

These spoken commands can be directed to those starting and stopping the welding process and can simply be the spoken command "start" or "stop".

These spoken commands can further be a command that controls the voltage, speed or amperage of the power source. These may be for example:
Up = raises the welding voltage by a preset increment
Down = lowers the welding voltage by a present increment
Fast = increases the wire speed by a preset increment
Slow = decreases the wire speed by a preset increment.

The spoken command may also be any command that selects a program or other preset function for example:
Program 1 = selects weld program number 1
Wire 2 = selects wire number 2
Process MAG = selects the GMAW (gas meal arc welding) process
Process TIG = selects the TIG (tungsten inert gas) welding process.

### Example 1

A welder starts welding a heavy profile. Soon after striking the arc, the welder recognizes that the welding process can be sped up. Rather than stopping and manually adjusting the parameters at the power source, the welder gives a series of spoken commands, namely "up - fast - up -fast -fast" and the welding process is adjusted without having to approach or physically manipulate the power source.

### Example 2

A welder is welding on a complex structure. This requires welding in different physical positions and therefore using different parameters stored in different welding programs on the power source. After finishing some welds in the horizontal positions using welding program number 1, the welder gives the brief vocal command "Program 2". The power source will switch to program number 2 and the welder can now weld in a vertical position. If further welding operations require that program number 1 be employed, the welder can speak this command and the power source will adjust accordingly.

While this invention has been described with respect to particular embodiments thereof, it is apparent that numerous other forms and modifications of the invention will be obvious to those skilled in the art. The appended claims in this invention generally should be construed to cover all such obvious forms and modifications which are within the true spirit and scope of the invention.

## Claims

1. A method for controlling a welding operation comprising a power source and a welding torch comprising speaking a command to the power source.

2. The method as claimed in claim 1 wherein the spoken command is made into a microphone.

3. The method as claimed in claim 2 wherein the microphone is mounted on welding apparel selected from the group consisting of a welding helmet, goggles, gloves, vest and jacket.

4. The method as claimed in claim 2 wherein the microphone is physically separate from a welder.

5. The method as claimed in claim 2 wherein the microphone is connected to the power source.

6. The method as claimed in claim 5 wherein the connection is selected from the group consisting of wired connections and wireless connections.

7. The method as claimed in claim 6 wherein the wireless connection is a Bluetooth connection.

8. The method as claimed in claim 1 wherein the welding operation is selected from the group consisting of arc welding, tungsten inert gas welding, plasma arc welding, and shielded metal arc welding.

9. The method as claimed in claim 1 wherein the power source further comprises means to interpret the spoken command

10. The method as claimed in claim 9 wherein the means to interpret the spoken command is selected from the group consisting of a programmable logic controller, voice recognition software and voice interpretation software.

11. The method as claimed in claim 10 wherein the means to interpret the spoken command interprets the spoken command and adjusts the power source in response thereto.

12. The method as claimed in claim 11 wherein the means to interpret the spoken command is physically separate from and in electronic communication with the power source.

13. The method as claimed in claim 1 wherein the spoken command is selected from a command to start the welding operation, stop the welding operation and change parameters of the welding operation.

14. A welding apparatus comprising a power source, a welding torch and a welding apparel, wherein the welding apparel contains a microphone in communication with the power source.

15. The welding apparatus as claimed in claim 14 wherein the welding apparel is selected from the group consisting of a welding helmet, goggles, gloves, vest and jacket.

16. The welding apparatus as claimed in claim 14 wherein the microphone is connected to the power source.

17. The welding apparatus as claimed in claim 16 wherein the connection is selected from the group consisting of wired connections and wireless connections.

18. The welding apparatus as claimed in claim 17 wherein the wireless connection is a Bluetooth connection.

19. The welding apparatus as claimed in claim 14 wherein the power source further comprises means to interpret the spoken command.

20. The welding apparatus as claimed in claim 17 wherein the means to interpret the spoken command is selected from the group consisting of a programmable logic controller, voice recognition software and voice interpretation software.

21. The welding apparatus as claimed in claim 20 wherein the means to interpret the spoken command interprets the spoken command and adjusts the power source in response thereto.

22. The welding apparatus as claimed in claim 21 wherein the means to interpret the spoken command is physically separate from and in electronic communication with the power source.

23. The welding apparatus as claimed in claim 21 wherein the spoken command is selected from a command to start the welding operation, stop the welding operation and change parameters of the welding operation.
